# EUROPEAN PATENT APPLICATION

(11) **EP 2 660 535 A1**
(43) Date of publication of application: **06.11.2013**
(21) Application number: 11852342.2
(22) Date of filing: 30.12.2011
(51) Int. Cl.: F24J 2/54

(54) **STRUCTURAL SUPPORT AZIMUTH ROTATION DEVICE**

(30) Priority: 30.12.2010 ES 201032007
(71) Applicant: Abengoa Solar New Technologies, S.A., 41018 Sevilla (ES)
(72) Inventor: ALBARRAN LIGERO, Justo, E-41018 Sevilla (ES)
(74) Representative: Carvajal y Urquijo, Isabel
(86) International application number: PCT/ES2011/070919
(87) International publication number: WO 2012/089890

(57) **Abstract**

Structural support azimuth rotation mechanism (2) comprising the following:
- a rotating structure (1) with respect to a fixed vertical rotation shaft (3), connected to the structural support (2) by connecting means, which includes:
o a flat base (10) in the center of which is located the fixed vertical rotation shaft (3), and
o a side wall (11) along the entire length of the perimeter of the flat circular base,

- at least one fixed azimuth rotation device (4) of the rotating structure (1), that includes rotation means (5, 6, 15, 16) that are supported by the side wall (11) of the rotating structure (1), and
- a fixed system of support on the ground, that includes the fixed vertical rotation shaft (3) and a plurality of feet (7, 7', 7"), on which is fixed at least one fixed azimuth rotation device (4).

## Description

### Field of the invention

The present invention is encompassed within the field of rotation mechanisms, and more specifically, of azimuth rotation mechanisms to be preferably applied to solar trackers.

### Background of the invention

The generation of energy from solar radiation is an industry in permanent development. There are many types of solar receivers, but all of them are based on a fundamental premise: the greater solar radiation they are able to capture, the greater amount of energy produced.

There are mainly two types of technologies: thermosolar and photovoltaic. Thermosolar technology is based on the concept of concentrating solar radiation to produce steam or hot air, which may be subsequently used in conventional power plants. Photovoltaic technology is based on the photoelectric effect to produce electricity.

There are two main groups of concentrators within thermosolar technology: point concentrators and linear concentrators. Within the point concentrators, we have the parabolic dish concentrators and central tower concentrators, the latter being surrounded by heliostats concentrating the sunlight on the same. Within the linear technology, we have the Cylindrical Parabolic Concentrator (CPC), which is the most mature concentration system, and the new Fresnel-Type Linear Collectors (FLC), which are currently starting to emerge, which also use mirrors to reflect sunlight.

The majority of these systems, either parabolic dish concentrators, heliostats, cylindrical parabolic concentrators, or photovoltaic modules, use a tracking system, which can be azimuthal, zenithal, or both, allowing them to remain permanently oriented towards the sun and thus increasing the amount of energy produced.

Among this multitude of solar trackers, there are solar trackers within the market basing the azimuth rotation of the solar collectors and the photovoltaic modules on mechanisms comprising a mobile structure, having several wheels rotating on a fixed raceway with respect to a central vertical shaft, such as the ones disclosed by US2001036024, EP2072934, or ES2308910.

US2001036024 specifically discloses a parabolic solar dish which azimuth rotation mechanism comprises a wheel, connected to a movement actuator support such that both rotate around a rail, and to which a second wheel may be added to regulate the speed of the ground wheel with a friction element to reduce the speed.

EP2072934 discloses a solar tracker that comprises an azimuth rotation mechanism of the solar panels consisting of a structure with a fixed central point and supporting wheels rotating around a bearing rail.

ES23 08910 relates to a biaxial solar tracker which azimuth rotation mechanism is based on a fixed horizontal platform, holding a circular rail, bearing elements supported by said rail, and to which a mobile frame is connected.

The problem presented by these systems is that the fixed circular bearing surface requires a flat surface without a slope, given that any irregularities in the terrain are transferred to the base of the tracker and directly affects the azimuth rotation movement. On the other hand, it should be noted that the precision of a solar tracker is essential to achieve the maximum production of a plant.

### Description of the invention

The invention relates to a structural support azimuth rotation mechanism that overcomes the aforementioned problems by means of a mechanism comprising the following:
- a rotating structure with respect to a fixed vertical rotation shaft, preferably circular, connected to the structural support by connecting means, which includes:
   o a flat base in the center of which is located the fixed vertical rotation shaft, and
   ○ a side wall along the entire length of the perimeter of the flat circular base,
- at least one fixed azimuth rotation device of the rotating structure, that includes rotation means that are supported by the side wall of the rotating structure, selected between friction rollers or pinion and belt sets, connected by means of a shaft to an electric motor providing movement, wherein the rotating means can be the following:
   o a motor friction roller supported by one side of the side wall of the rotating structure, connected by means of a shaft to an electric motor providing movement, and optionally, a second idler roller supported by the opposite side of the side wall of the mobile circular structure, which mission is to put pressure on the set of the two against the circular wall, such that movement is transmitted by friction, or
   o a motor pinion-flexible traction element set, comprising a motor pinion, connected by means of a shaft to an electric motor providing movement, which is engaged to a flexible traction element selected between a belt and a chain, affixed to the side wall of the rotating structure by means of tensioning elements, and
- a fixed system of support on the ground, that includes the fixed vertical rotation shaft and a plurality of feet, adjustable in height, on which is fixed the fixed azimuth rotation device by means of connecting means,
- optionally, the mechanism can include a rotating structure leveling device, affixed by connecting means to each peripheral foot of the system of support, which comprises at least one load ball, preferably metallic, partially enveloped by a sleeve such that the ball is supported by the lower face of the flat base of the rotating structure. Smaller balls may be arranged between the sleeve and the ball to allow the rotation of the load ball and transmit the force towards the sleeve.

One of the advantages of this mechanism is that the azimuth,rotation device is fixed, such that the supply cables to the motors do not move along with the mobile part, due to which their length is consent and tangling issues are avoided. In addition, their maintenance is easy to carry out.

The possibility of regulating the ends of the fixed part and also comprising a leveling device provides the advantage of not having to undertake works to level the flooring, given that, in the case of solar trackers, each tracker is adapted to the slope of the terrain, which supposes important progress with respect to the aforementioned state of the art.

### Brief description of the drawings

Next, a series of drawings that help understanding the invention better and that are expressly related to an embodiment of said invention presented as an illustrative rather than limitative example of the same, are described below.
Figure 1 shows a perspective view of the rotation mechanism of the preferred embodiment.
Figure 2 shows a plant view of figure 1.
Figure 3 shows a plant view of the rotation mechanism of figure 1.
Figure 4 shows a perspective view of the system of support of the rotation mechanism.
Figure 5 shows a lower view of a mechanism of the invention with the fixed azimuth rotation device with the motor pinion-flexible traction element set.
Figure 6 shows a perspective view of the fixed azimuth rotation device with the motor pinion-flexible traction element set, wherein the flexible traction element is located between the motor pinion and the side wall of the rotating structure.
Figure 7 shows a perspective view of the fixed azimuth rotation device with the motor pinion-flexible traction element set, wherein the motor pinion is located between the flexible traction element and the side wall of the rotating structure.

A series of references are identified in the aforementioned figures, which correspond to the elements indicated above without it being limitative in any way.
1.- Circular rotating structure,
2.- Structural support,
3.- Fixed vertical rotation shaft,
4.- Fixed azimuth rotation device,
5.- Motor friction roller,
6.- Idler friction roller,
7.- Peripheral foot,
8.- Central foot,
9.- Solar panel,
10.- Circular flat base of the rotating structure,
11.- Side wall of the rotating structure,
12.- Electric motor,
13.- leveling device,
14.- Load ball,
15.- Motor pinion,
16.- Flexible traction element,
17.- Tensioning elements.

### Detailed description of an embodiment

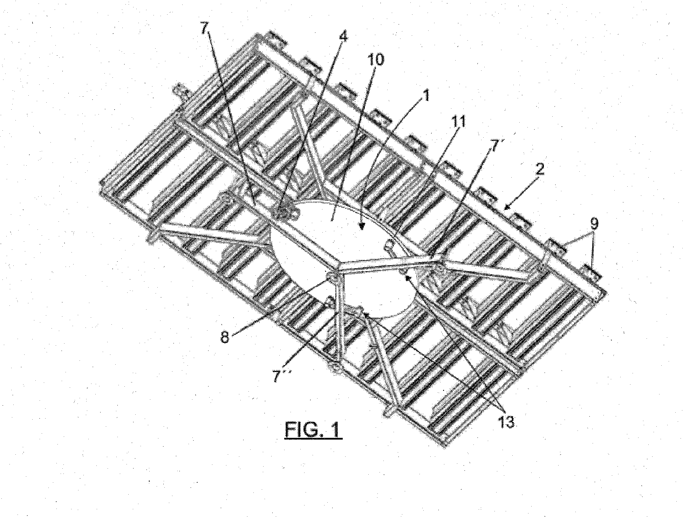

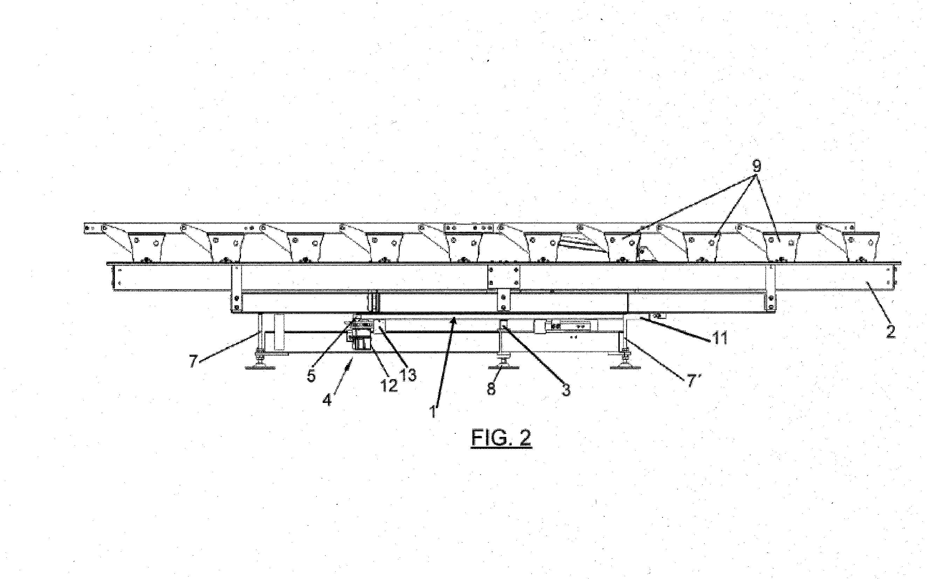

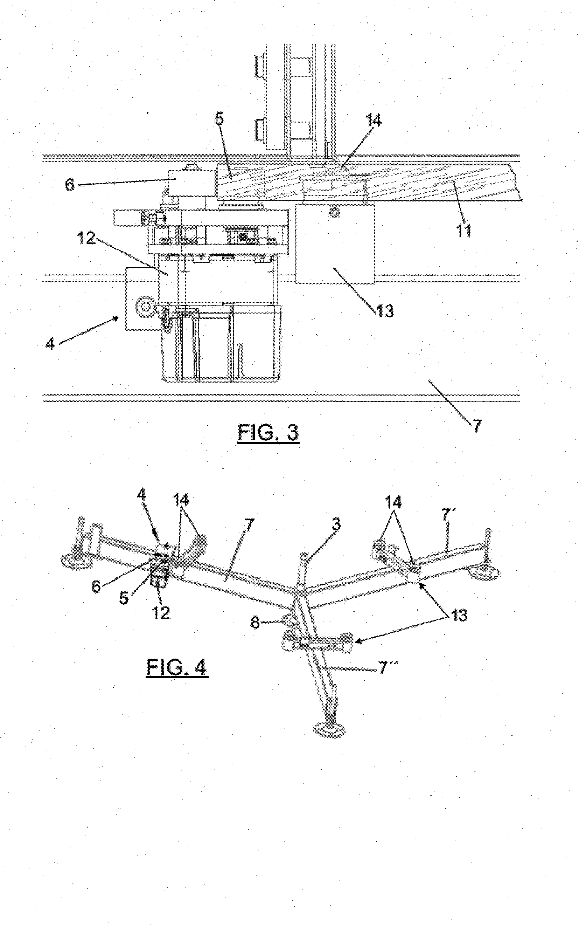

The rotating mechanism described in this preferred embodiment, as shown in figures 1-3, relates to a structural support azimuth rotation mechanism for solar modules comprising a rotating structure (1) with a circular shape, with respect to a fixed vertical rotation shaft (3), and connected to the structural support (2) of the solar modules by connecting means, which includes:
- a circular flat base (10) in the center of which is located the fixed vertical rotation shaft (3), and
- a side wall (11) along the entire perimeter of the circular flat base, Likewise, the fixed azimuth rotation device (4), in order to move the circular rotating structure (1), comprises a motor friction roller (5) supported by the internal side of the side wall of the circular mobile structure (1), and a idler friction roller (6) supported by the external side of the side wall of the circular mobile structure (1) or, in other words, supported by the face of the side wall (11) of the rotating structure (1) opposite the face on which the motor friction roller (5) is supported, the motor roller (5) being actuated by an electric motor (12) to which it is connected.

To achieve the stability of the solar tracker, the mechanism also comprises a fixed system of support on the ground that includes three adjustable peripheral feet (7, 7', 7"), on which the fixed azimuth rotation device (4) is affixed. These three feet are connected at the center, where a fourth adjustable central foot (8) is found, next to the fixed vertical rotation shaft (3).

On the other hand, the mechanism comprises a leveling device (13), affixed by connecting means to each peripheral foot (7, 7', 7"), which comprises two load balls (14), supported by a sleeve each, which, connected to the fixed azimuth rotation device (4), allow the azimuth rotation of the structural support of the tracker located on sloping terrain. The load or support balls are devices that allow the translation of the objects supported on the same. They operate in sets and are formed by a metallic load ball (14) and a sleeve partially enveloping the ball. Usually, there are smaller balls between the ball and the sleeve to allow the rotation of the load ball and transmit the force towards the sleeve.

Optionally, the rotating means can comprise an idler roller (6) supported on the opposite side of the side wall of the circular mobile structure (1).

Another way of achieving the azimuth movement is using a motor pinion-flexible traction element set as rotating means of the fixed azimuth rotation device (4), wherein the motor pinion (15), connected to an electric motor (12), can be located between the flexible traction element (16) and the side wall (11) of the rotating structure (1), or the flexible traction element (16) can be the one located between the side wall (11) and the motor pinion (15), the flexible traction element (16) being affixed to the side wall (11) of the rotating structure (1) by means of tensioning elements (17) in both cases.

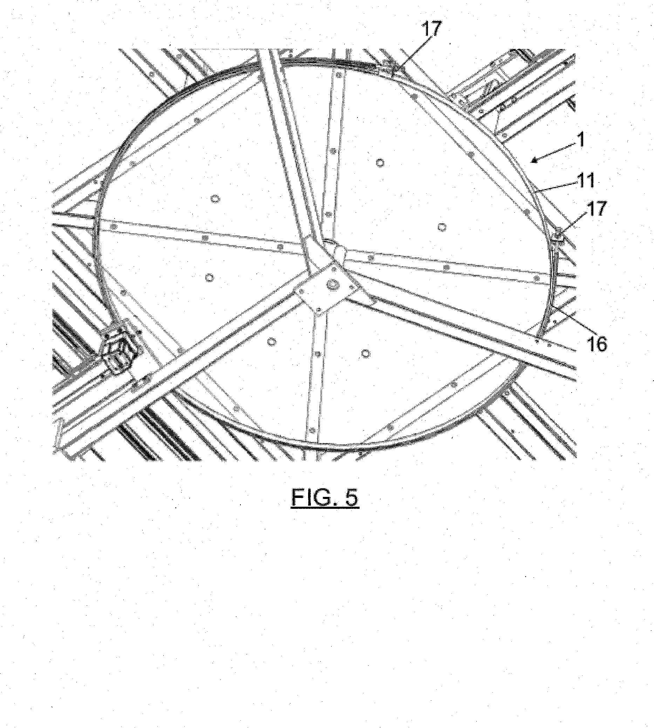

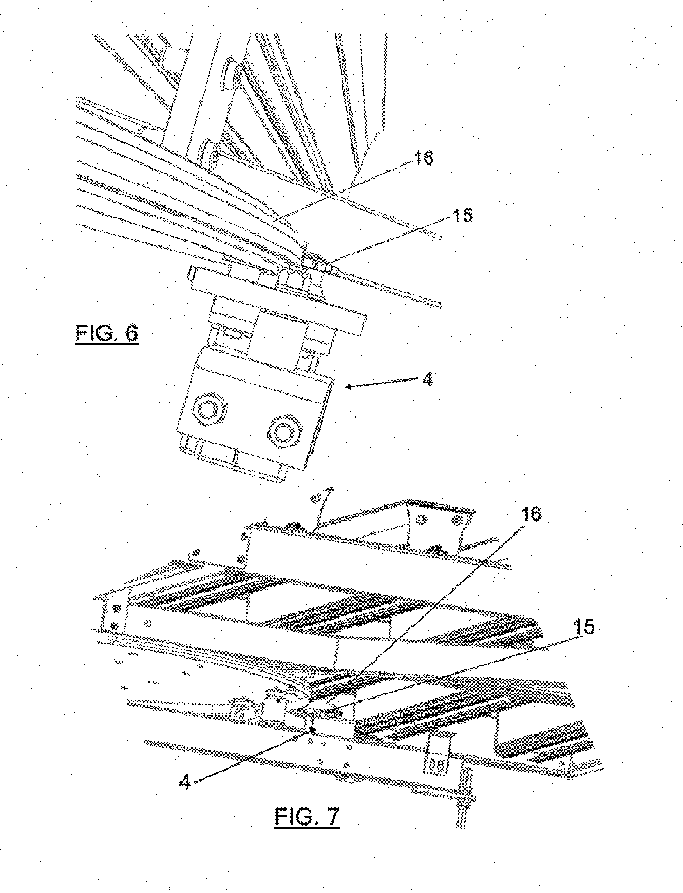

Figures 5 and 6 show a detail of a mechanism of the invention with a motor pinion-flexible traction element set as the azimuth rotation device (4), wherein the flexible traction element (16) is located between the motor pinion (15) and the side wall (11) of the rotating structure (1), and wherein a belt is used as the flexible traction element (16). In addition, an optional element has been included, an idler roller (6), to put pressure on the face of the side wall (11) of the rotating structure (1), opposite the face on which the belt is supported, which mission is to put pressure on the set against the circular wall.

This belt can be replaced by a chain, in which case it cannot include an idler friction roller (6).

Figure 7 shows a detail of a mechanism of the invention with a motor pinion-flexible traction element set as the azimuth rotation device (4), wherein the motor pinion (15) is away from the rotating structure (1), being located between the flexible traction element (16) and the rotating structure (1). The idler roller (6) is not included in this case because it is not deemed necessary.

## Claims

1. Structural support azimuth rotation mechanism (2), **characterized in that** it comprises the following:
- a rotating structure (1) with respect to a fixed vertical rotation shaft (3), connected to the structural support (2) by connecting means, which includes:
o a flat base (10) in the center of which is located the fixed vertical rotation shaft (3), and
o a side wall (11) along the entire length of the perimeter of the flat circular base,
- at least one fixed azimuth rotation device (4) of the rotating structure (1), that includes rotation means (5, 6, 15, 16) that are supported by the side wall (11) of the rotating structure (1), and
- a fixed system of support on the ground, that includes the fixed vertical rotation shaft (3) and a plurality of peripheral feet (7, 7', 7"), on which is fixed at least one fixed azimuth rotation device (4).

2. Structural support azimuth rotation mechanism (2) according to claim 1, **characterized in that** the rotating means of the fixed azimuth rotation device (4) are a motor friction roller (5), supported on a face of the side wall (11) of the rotating structure (1), connected to a electric motor (12) providing movement by means of a shaft.

3. Structural support azimuth rotation mechanism (2) according to claim 1, **characterized in that** the rotating means of the fixed azimuth rotation device (4) are a motor pinion-flexible traction element set, comprising a motor pinion (15) connected, by means of a shaft, to an electric motor (12) providing movement, which is engaged to a flexible traction element (16) affixed to the side wall (11) of the rotating structure (1) by means of tensioning elements (17).

4. Structural support azimuth rotation mechanism (2) according to claim 3, **characterized in that** the flexible traction element (16) is located between the motor pinion (15) and the side wall (11) of the rotating structure (1).

5. Structural support azimuth rotation mechanism (2) according to claim 3, **characterized in that** the motor pinion (15) is located between the flexible traction element (16) and the side wall (11) of the rotating structure (1).

6. Structural support azimuth rotation mechanism (2) according to claims 3-5, **characterized in that** the flexible traction element (16) is a belt.

7. Structural support azimuth rotation mechanism (2) according to claims 3-5, **characterized in that** the flexible traction element (16) is a toothed chain.

8. Structural support azimuth rotation mechanism (2) according to claim 2, **characterized in that** the fixed azimuth rotation device (4) of the rotating structure (1) comprises an idler friction roller (6) supported on the face of the side wall (11) of the rotating structure (1) opposite the face on which the motor friction roller (5) is supported.

9. Structural support azimuth rotation mechanism (2) according to claim 4, **characterized in that** the fixed azimuth rotation device (4) of the rotating structure (1) comprises an idler friction roller (6) supported on the face of the side wall (11) of the rotating structure (1) opposite the face on which a belt, as the flexible traction element (16), is supported.

10. Structural support azimuth rotation mechanism (2) according to the previous claims, **characterized in that** it comprises a leveling device (13), affixed by means of connecting means to at least one of the peripheral feet (7, 7', 7") of the system of support.

11. Structural support azimuth rotation mechanism (2) according to claim 10, **characterized in that** the leveling device (13) comprises at least one load ball (14) partially enveloped by a sleeve, such that the ball (14) is supported by the lower face of the flat base (10) of the rotating structure (1).

12. Structural support azimuth rotation mechanism (2) according to the previous claims, **characterized in that** the rotating structure (1) has a circular shape.

13. Structural support azimuth rotation mechanism (2) according to the previous claims, **characterized in that** the system of support comprises at least three peripheral feet (7, 7', 7") and one central foot (8).

14. Structural support azimuth rotation mechanism (2) according to the previous claims, **characterized in that** the peripheral feet (7, 7', 7") and central foot (8) are adjustable in height.

## Amended claims

### Amended claims under Art. 19.1 PCT

**1.** Structural support azimuth rotation mechanism (2), **characterized in that** it comprises the following:
- a rotating structure (1) with respect to a fixed vertical rotation shaft (3), connected to the structural support (2) by connecting means, which includes:
o a flat base (10) in the center of which is located the fixed vertical rotation shaft (3), and
o a side wall (11) along the entire length of the perimeter of the flat circular base,
- at least one fixed azimuth rotation device (4) of the rotating structure (1), that includes rotation means (5, 6, 15, 16) that are supported by the side wall (11) of the rotating structure (1), and
- a fixed system of support on the ground, that includes the fixed vertical rotation shaft (3) and a plurality of peripheral feet (7, 7', 7"), on which is fixed at least one fixed azimuth rotation device (4),
- and a leveling device (13) affixed to the system of support by means of connecting means.

**2.** Structural support azimuth rotation mechanism (2) according to claim 1, **characterized in that** the rotating means of the fixed azimuth rotation device (4) are a motor friction roller (5), supported on a face of the side wall (11) of the rotating structure (1), connected to a electric motor (12) providing movement by means of a shaft.

**3.** Structural support azimuth rotation mechanism (2) according to claim 1, **characterized in that** the rotating means of the fixed azimuth rotation device (4) are a motor pinion-flexible traction element set, comprising a motor pinion (15) connected, by means of a shaft, to an electric motor (12) providing movement, which is engaged to a flexible traction element (16) affixed to the side wall (11) of the rotating structure (1) by means of tensioning elements (17).

**4.** Structural support azimuth rotation mechanism (2) according to claim 3, **characterized in that** the flexible traction element (16) is located between the motor pinion (15) and the side wall (11) of the rotating structure (1).

**5.** Structural support azimuth rotation mechanism (2) according to claim 3, **characterized in that** the motor pinion (15) is located between the flexible traction element (16) and the side wall (11) of the rotating structure (1).

**6.** Structural support azimuth rotation mechanism (2) according to claims 3-5, **characterized in that** the flexible traction element (16) is a belt.

**7.** Structural support azimuth rotation mechanism (2) according to claims 3-5, **characterized in that** the flexible traction element (16) is a toothed chain.

**8.** Structural support azimuth rotation mechanism (2) according to claim 2, **characterized in that** the fixed azimuth rotation device (4) of the rotating structure (1) comprises an idler friction roller (6) supported on the face of the side wall (11) of the rotating structure (1) opposite the face on which the motor friction roller (5) is supported.

**9.** Structural support azimuth rotation mechanism (2) according to claim 4, **characterized in that** the fixed azimuth rotation device (4) of the rotating structure (1) comprises an idler friction roller (6) supported on the face of the side wall (11) of the rotating structure (1) opposite the face on which a belt, as the flexible traction element (16), is supported.

**10.** Structural support azimuth rotation mechanism (2) according to the previous claims, **characterized in that** the leveling device (13) is affixed by means of connecting means to at least one of the peripheral feet (7, 7', 7") of the system of support.

**11.** Structural support azimuth rotation mechanism (2) according to the previous claims, **characterized in that** the leveling device (13) comprises at least one load ball (14) partially enveloped by a sleeve, such that the ball (14) is supported by the lower face of the flat base (10) of the rotating structure (1).

**12.** Structural support azimuth rotation mechanism (2) according to the previous claims, **characterized in that** the rotating structure (1) has a circular shape.

**13.** Structural support azimuth rotation mechanism (2) according to the previous claims, **characterized in that** the system of support comprises at least three peripheral feet (7, 7', 7") and one central foot (8).

**14.** Structural support azimuth rotation mechanism (2) according to the previous claims, **characterized in that** the peripheral feet (7, 7', 7") and central foot (8) are adjustable in height.
